# EUROPÄISCHE PATENTANMELDUNG

(11) **EP 4 830 944 A1**
(43) Veröffentlichungstag der Anmeldung: **28.10.2026**
(21) Anmeldenummer: 26170958.8
(22) Anmeldetag: 07.04.2026
(51) Int. Cl.: B60C 5/14, B29D 30/06, B60C 19/00

(54) **FAHRZEUGREIFEN**

(30) Priorität: 25.04.2025 DE 102025116006
(71) Anmelder: Continental Reifen Deutschland GmbH, 30175 Hannover (DE)
(72) Erfinder: Dr. Bederna, Christoph, 30175 Hannover (DE); Dr. Strübel, Christian, 30175 Hannover (DE)
(74) Vertreter: Continental Corporation

(57) **Zusammenfassung**

Fahrzeugluftreifen mit einem Laufstreifen (1), Seitenwänden (5) sowie Wulstbereichen (6) mit Wulstkernen (7) und jeweils einem eine Wulstsitzfläche und eine Wulstzehe bildenden Gummibauteil (10), einer Reifenkarkasse (3) mit zumindest einer Karkasslage und einer Reifeninnenseite,

Die Reifenkarkasse (3) bildet bis in die Wulstbereiche (6) reichend die Reifeninnenseite,
wobei im Reifeninneren ein vorgeformter torusförmiger Dichtkörper (11) aus thermoplastischem Elastomer eingebracht ist, wobei der Dichtkörper (11) derart gestaltet ist, dass er an der Reifeninnenseite anliegt, höchstens bis in die Bereiche seitlich der Wulstkerne (7) reicht und an einzelnen Stellen mit der Reifeninnenseite durch Kleben lösbar verbunden ist.

## Beschreibung

Die Erfindung betrifft einen Fahrzeugluftreifen mit einem Laufstreifen, Seitenwänden sowie Wulstbereichen mit Wulstkernen und jeweils einem eine Wulstsitzfläche und eine Wulstzehe bildenden Gummibauteil, einer Reifenkarkasse mit zumindest einer Karkasslage und einer Reifeninnenseite.

Es ist üblich, dass Fahrzeugluftreifen beim Aufbau mit einem mit der Reifenkarkasse verbundenen Innerliner versehen werden. Bei üblichen Innerlinern handelt es sich um Gummimateriallagen, die auf einer Kautschukmischung mit oder aus Halobutyl-Kautschuk basieren. Der Innerliner hat die Funktion, die Luftdichtigkeit des Fahrzeugluftreifens zu gewährleisten. Ohne diese Materiallage würde der Fahrzeugluftreifen kontinuierlich an Luftdruck verlieren, da die anderen Reifenbauteile im Allgemeinen keine ausreichende Luftdichtigkeit aufweisen. Derartige, aus Halobutyl-Kautschuken hergestellte Innenschichten weisen eine hohe Dämpfung auf und tragen daher wesentlich zum Rollwiderstand des Fahrzeugluftreifens bei.

Ein Fahrzeugluftreifen der eingangs genannten Art ist aus der JP 2014083894 A bekannt. An der Innenseite des Fahrzeugluftreifens befindet sich eine beim Aufbau des Rohreifens mit der Reifenkarkasse flächig und fest verbundene luftundurchlässige Auskleidungsschicht aus einer Folie, die aus einem thermoplastischen Harz oder einer thermoplastischen Elastomerzusammensetzung, die durch Mischen einer Elastomerkomponente in ein thermoplastisches Harz erhalten wird, besteht. Die Auskleidungsschicht ist innenseitig der Seitenwände innerhalb von Abschnitten von 0,15 bis 0,55 der Reifenquerschnittshöhe dünner als in ihren anderen Abschnitten und weist in diesen Abschnitten eine Dicke von 0,05 mm bis 0,20 mm auf. Die thermoplastische Harzschicht ist in diesen dünneren Abschnitten mit einer Gummischicht, die 65 Gew.-% bis 100 Gew.-% eines Butylkautschuks enthält, bedeckt, um die Luftdichtigkeit in diesen Bereichen sicherzustellen. Die thermoplastische Harzschicht wird mitsamt der Kautschukmischungsschicht der Gummischicht beim Aufbau des Rohrreifen mit der Reifenkarkasse verbunden, bevor der Reifen vulkanisiert wird. Ein derartiger Fahrzeugluftreifen soll ein geringeres Gewicht und dadurch einen verminderten Rollwiderstand aufweisen.

Aus der JP 7052285 B2 ist ein Fahrzeugluftreifen mit einer Innenschicht bekannt, die aus einer thermoplastischen Elastomerzusammensetzung besteht, welche in einem thermoplastischen Harz dispergierte Kautschukteilchen aufweist. Die Innenschicht wird ebenfalls beim Aufbau des Rohreifens mit der Reifenkarkasse verbunden. Die spezielle Zusammensetzung der Innenschicht soll das Entstehen von Fehlstellen bei der Reifenvulkanisation verhindern.

Bei dem aus der JP 5262278 B2 bekannten Fahrzeugluftreifen besteht die Innenschicht aus einem Film aus einem thermoplastischen Harz oder einer thermoplastischen Elastomerzusammensetzung, die durch Mischen von Elastomer in das thermoplastische Harz erhalten wird und beim Aufbau des Rohreifens flächig mit der Reifenkarkasse verbunden wird. Die Innenschicht endet in den Wulstbereichen jeweils in einem Abstand zu den Wulstzehen. An die hier befindlichen radial inneren Enden der Innenschicht schließt jeweils eine Hilfszwischenlage zur Verhinderung von Luftdurchlässigkeit in diesen Bereichen an. Die Hilfszwischenlagen bestehen aus einer Kautschukmischung mit mindestens 30 Gewichtsteilen Butylkautschuk, verlaufen reifeninnenseitig entlang der Außenseiten der Wulstbereiche und enden innerhalb von Felgenpolstergummis.

Der Erfindung liegt die Aufgabe zugrunde, bei einem Fahrzeugluftreifen der eingangs genannten Art die Luftdichtigkeit sicherzustellen ohne besondere Verfahrensschritte beim Aufbau des Rohreifens zu erfordern und/oder Probleme bei der Vulkanisation zu verursachen, wobei auf einen geringen Rollwiderstand des Reifens geachtet werden soll.

Gelöst wird die gestellte Aufgabe erfindungsgemäß dadurch, dass die Reifenkarkasse bis in die Wulstbereiche reichend die Reifeninnenseite bildet und dass im Reifeninneren ein vorgeformter torusförmiger Dichtkörper aus thermoplastischem Elastomer eingebracht ist, wobei der Dichtkörper derart gestaltet ist, dass er an der Reifeninnenseite anliegt, höchstens bis in die Bereiche seitlich der Wulstkerne reicht und an einzelnen Stellen mit der Reifeninnenseite durch Kleben lösbar verbunden ist.

Ein Fahrzeugluftreifen gemäß der Erfindung enthält daher anstelle einer üblichen, mit der Reifeninnenseite flächig und unlösbar verbundenen luftdichten Innenschicht einen vorgeformten torusförmigen Dichtkörper aus die erforderliche Luftdichtigkeit sicherstellendem thermoplastischen Elastomer. Der Dichtkörper ist daher ein separat hergestellter Bauteil, welcher nach der Vulkanisation des Fahrzeugluftreifens in das Reifeninnere eingebracht und reifeninnenseitig lokal angeklebt wird. Da der Dichtkörper höchstens bis in die Bereiche seitlich der Wulstkerne reicht, kommen die bei der Montage des Fahrzeugluftreifen auf einer Felge beanspruchten Wulstbereiche, insbesondere die Wulstsitzflächen und die Wulstzehen, mit dem Dichtkörper nicht in Kontakt. Der Dichtkörper liegt analog einem Innenschlauch an der Innenseite des Reifens an und wird bei eingebrachten Innendruck an die Innenseite gedrückt. Ein weiterer Vorteil des Dichtkörpers ist dessen leichte Entfernung aus dem abgefahrenen Reifen, beispielsweise zum Zweck einer stofflichen Wiederverwendung des Reifens und des Dichtkörpers. Ein geringer Rollwiderstand des Reifens kann durch die Wahl des Elastomers bzw. der Elastomere und die dadurch wählbare Dicke des Dichtkörpers unterstützt werden.

Bei einer bevorzugten Ausführung ist der torusförmige Dichtkörper ausschließlich an den Wulstbereichen lokal angeklebt. Diese Maßnahme ist im Hinblick auf ein leichtes Entfernen des Dichtkörpers aus dem abgefahrenen Reifen von Vorteil.

In den Wulstbereichen getroffene Maßnahmen bzw. Ausgestaltungen sind für ein dauerhaltbares Ankleben des Dichtkörpers besonders vorteilhaft.

Bei einer dieser bevorzugten Ausgestaltungen ist in jedem Wulstbereich ein aus einem luftdichten Material bestehender, in Umfangsrichtung umlaufender Dichtstreifen enthalten, welcher einen an der Reifeninnenseite verlaufenden Teilabschnitt aufweist, an welchem der Dichtkörper angeklebt ist.

Um die Dichtstreifen zuverlässig in den Wulstbereichen einzubauen, ist bei einer bevorzugten Ausführung vorgesehen, die Dichtstreifen in jedem Wulstbereich zwischen dem Gummibauteil und der Reifenkarkasse und in Kontakt zu dieser einzubauen. Darüber hinaus weisen die Dichtstreifen einen radial innerhalb des Wulstkerns verlaufenden Abschnitt und einen reifeninnenseitig verlaufenden Abschnitt auf, wobei letzterer mit einem Teilabschnitt den Gummibauteil in radialer Richtung und Richtung Laufstreifen überragt.

Bevorzugt weisen die Dichtstreifen eine insbesondere konstante Dicke von 0,50 mm bis 1,20 mm auf und bestehen aus einem Gummimaterial, welches auf einer Kautschukmischung basiert, die zumindest einen Halobutylkautschuk enthält.

Eine haltbare Klebeverbindung zwischen dem Dichtkörper und den den Gummibauteil überragenden Teilabschnitte der Dichtstreifen sicherzustellen, ist es von Vorteil, wenn diese Teilabschnitte eine Breite von 10,00 mm bis 15,00 mm aufweisen.

Besonders bevorzugt ist eine Ausführung des Dichtkörpers, bei welcher dieser aus thermoplastischem Elastomerschaum besteht. Durch dieses geschäumte, geschlossenzellige Material ist der Dichtkörper besonders diffusionsdicht. Das geringe Gewicht des geschäumten Materials kann ferner zu einer merklichen Reduktion des Rollwiderstands beitragen.

Bevorzugt sind Ausführungen des Dichtkörpers, bei welcher dieser eine Wandstärke von 0,50 mm bis 8,00 mm, insbesondere von 1,00 mm bis 5,00 mm, bevorzugt bis 2,00 mm, aufweist.

Eine besonders diffusionsdichte Ausführung des Dichtkörpers bei geringem Gewicht lässt sich bei einer Ausführung aus thermoplastischem Elastomerschaum erreichen, bei welcher der Dichtkörper eine Dichte von 20% bis 95%, insbesondere von 50% bis95 %, bevorzugt von 70% bis 95%, der Dichte des jeweiligen dem Schaum zugrunde liegenden nicht geschäumten thermoplastischen Elastomers bzw. der Dichte der jeweiligen dem Schaum zugrunde liegenden nicht geschäumten thermoplastischen Elastomere aufweist.

Dabei weist der thermoplastische Elastomerschaum bevorzugt ein Raumgewicht gemäß DIN EN 14304 2013-04 von 100 kg/m³ bis 1000 kg/m³ auf.

Es kommt eine Vielzahl von thermoplastischen Elastomeren als Material für den Dichtkörper infrage, insbesondere ein thermoplastisches Elastomer oder mehrere thermoplastische Elastomere aus der Gruppe thermoplastische Polyamidelastomere, thermoplastische Copolyesterelastomere, thermoplastische Elastomere auf Olefinbasis, thermoplastische Styrol-Blockcopolymere, thermoplastische Elastomere auf Urethanbasis, thermoplastische Vulkanisate oder vernetzte thermoplastische Elastomere auf Olefinbasis.

Zur Absorption von Schall kann bei einer weiteren bevorzugten Ausführung auf der dem Laufstreifen zugewandten Außenseite des Dichtkörpers ein NVH-Absorberschaum, beispielsweise aus Polyurethan, angebracht sein.

Zur Erhöhung der Durchstichfestigkeit des Laufstreifenbereichs kann an der Reifeninnenseite radial innerhalb des Laufstreifens eine stichfeste Verstärkungslage, beispielsweise eine mit Kevlar, Stahlcorden und dergleichen, verstärkte Gummilage, festhaftend angebracht sein.

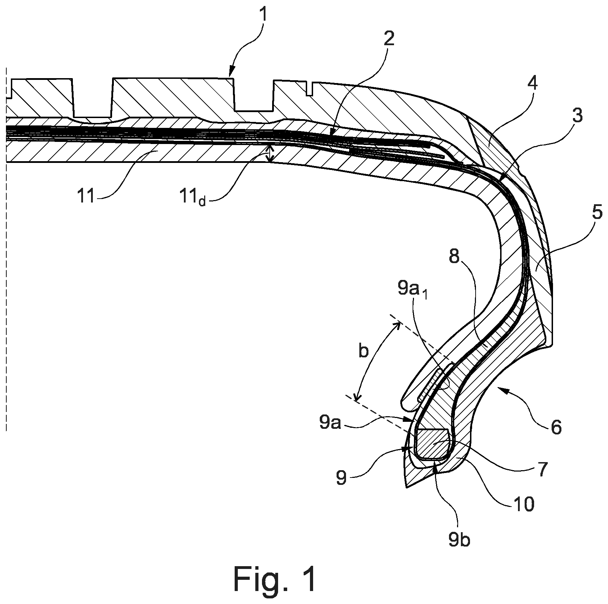

Weitere Merkmale, Vorteile und Einzelheiten der Erfindung werden nun anhand der Zeichnung, die schematisch ein Ausführungsbeispiel der Erfindung darstellt, näher beschrieben. Dabei zeigt
Figur 1 eine radiale Schnittansicht einer Hälfte eines Fahrzeugluftreifens mit einer Ausführungsform der Erfindung.

Fahrzeugluftreifen gemäß der Erfindung sind Reifen für Personenkraftwagen, Light Trucks, Nutzfahrzeuge oder Zweirad- Fahrzeuge und bevorzugt Fahrzeugluftreifen in Radialbauart.

Figur 1 zeigt beispielhaft einen Fahrzeugluftreifen für Personenkraftwagen mit üblichen Bestandteilen, wie einem Laufstreifen 1, einem Gürtelverband 2 mit im Beispiel zwei Gürtellagen, einer Reifenkarkasse 3 aus zumindest einer Karkasslage aus in eine Gummimischung eingebetteten Festigkeitsträgern, jeweils einem an den Laufstreifen 1 anschließenden Winggummi 4, Seitenwänden 5 und Wulstbereichen 6. In den Wulstbereichen 6 ist der Fahrzeugluftreifen mit je einem Wulstkern 7 verstärkt, um welchen die Reifenkarkasse 3 von reifeninnenseitig nach reifenaußenseitig umgeschlagen ist. Auf jedem Wulstkern 7 befindet sich ein Kernprofil 8 aus einem Gummimaterial. Die Reifenkarkasse 3 verläuft durchgehend von Wulstbereich 6 zu Wulstbereich 6, umläuft bzw. umschlingt in jedem Wulstbereich 6 den Wulstkern 2 unter Bildung des Hochschlags und bildet bis auf radial innerste Teilbereiche der Wulstbereiche 6 die Innenseite des Reifens. Ein Gummibauteil 10, hier ein Hornprofil, bedeckt reifenaußenseitig den Hochschlag der Reifenkarkasse 3 und bildet im Wulstbereich 6 die Wulstsitzfläche und die Wulstzehe.

Im Wulstbereich 6 befindet sich zwischen dem Gummibauteil 10 und der Reifenkarkasse 3 ein aus einem luftdichten Gummimaterial bestehender, beispielsweise auf Basis einer Kautschukmischung mit Halobutylkautschuk erstellter, Dichtstreifen 9, welcher eine weitgehend konstante Dicke von 0,50 mm bis 1,20 mm, einen reifeninnenseitig verlaufenden Abschnitt 9a sowie einen unterhalb, also radial innerhalb, des Wulstkerns 2 verlaufenden Abschnitt 9b aufweist. Über beide Abschnitte 9a, 9b verläuft der Streifen 9 entlang der Reifenkarkasse 3 und in Kontakt zu dieser. Der reifeninnenseitig verlaufende Abschnitt 9a überragt den Gummibauteil 10 mit einem Teilabschnitt 9a₁ mit einer Breite b von 10,00 mm bis 15,00 mm.

In den fertig vulkanisierten Fahrzeugluftreifen ist ein torusförmig vorgeformter Dichtkörper 11 eingebracht, welcher aus thermoplastischem Elastomer (TPE) besteht. Unter "thermoplastischem Elastomer" wird sowohl ein spezifisches thermoplastisches Elastomer als auch eine Mischung aus mehreren thermoplastischen Elastomeren verstanden. Bei der bevorzugten Ausführung besteht der Dichtkörper 11 aus geschäumtem thermoplastischem Elastomer, daher aus einem geschlossenenzelligen Schaummaterial, bei einer alternativen Ausführung aus ungeschäumtem thermoplastischem Elastomer.

Der Dichtkörper 11 ist derart gestaltet, dass seine Gestalt an die torusförmige Innenseite des jeweiligen Fahrzeugluftreifen angepasst ist, um an der Reifeninnenseite anzuliegen. Der Dichtkörper 11 wird in einem separaten Verfahren als zum jeweiligen Reifen passendes Bauteil hergestellt und weist eine bevorzugt weitgehend konstante Wandstärke 11_{d} von 0,50 mm bis 8,00 mm, insbesondere 1,00 mm bis 5,00 mm, bevorzugt bis 2,00 mm, auf. Aus geschäumtem thermoplastischem Elastomer bestehende Dichtkörper 11 können eine größere Wandstärke aufweisen als jene aus ungeschäumtem thermoplastischem Elastomer. Bei einer bevorzugten Ausführung variiert die Wandstärke 11_{d} innerhalb der erwähnten Wandstärken-Bereiche, beispielsweise derart, dass die Wandstärke 11_{d} im radial innerhalb des Laufstreifens 1 verlaufenden Abschnitt des Dichtkörpers 11 am größten ist und in Richtung zu den Wulstbereichen 6 insbesondere kontinuierlich abnimmt. Der Dichtkörper 11 ist ferner derart gestaltet, dass er entlang der seitlichen Abschnitte der Reifeninnenseite so weit reicht, dass er mit den Teilbereichen 9a₁ der Dichtstreifen 9 zumindest teilweise, insbesondere komplett, überlappt, bevorzugt mit einer Überlappungsbreite von mindestens 10,00 mm. In den Überlappungsbereichen ist der Dichtkörper 11 mit den Dichtstreifen 9, beispielsweise mittels Kleben, fest verbunden. Bei einer alternativen Ausführung ist der Dichtkörper 11 an zumindest einer weiteren Stelle mit der Reifeninnenseite lokal verklebt.

Ein aus thermoplastischem Elastomerschaum bestehender Dichtkörper 11 weist eine Dichte von 20% bis 95%, insbesondere von 50% bis 95%, bevorzugt von 70% bis 95%, der Dichte des jeweiligen nicht geschäumten thermoplastischen Elastomers bzw. der Dichte der jeweiligen nicht geschäumten thermoplastischen Elastomermischung auf.

Das/die thermoplastische(n) Elastomer(e) ist bzw. sind insbesondere ausgewählt aus der Gruppe thermoplastische Polyamidelastomere, thermoplastische Copolyesterelastomere, thermoplastische Elastomere auf Olefinbasis, thermoplastische Styrol-Blockcopolymere, thermoplastische Elastomere auf Urethanbasis, thermoplastische Vulkanisate oder vernetzte thermoplastische Elastomere auf Olefinbasis.

Zusätzlich kann auf der im Laufstreifenbereich zugeordneten Innenseite des Dichtkörpers 11 ein NVH (Noise, Vibration, Harshness) - Absorberschaum angebracht sein. Absorberschäume sind üblicherweise offenzellige, leichte Schäume, etwa aus Polyurethan. Das zur Geräuschabsorption möglichst optimale Volumen des Schaums wird an die jeweiligen Anforderungen und die Reifengröße angepasst. Beispielsweise wird ein Absorberschaum in Form eines über die Innenseite des Dichtkörpers 11 umlaufenden Schaumstreifens mit einer Breite von ca. 10 cm und einer Dicke von ca. 2 cm haftend an der Innenseite des Dichtkörpers 11 angebracht, beispielsweise angeklebt.

Darüber hinaus kann eine Maßnahme zur Verbesserung oder Sicherstellung der Durchstichfestigkeit des Reifens im Laufstreifenbereich gesetzt sein, indem beispielsweise unmittelbar an der Reifeninnenseite radial innerhalb des Laufstreifens eine stichfeste Verstärkungslage, beispielsweise eine dünne mit Kevlar, Stahlcorden und dergleichen verstärkte Gummilage haftend angebracht ist.

### Bezugszeichenliste

- 1: Laufstreifen
- 2: Gürtelverband
- 3: Reifenkarkasse
- 4: Winggummi
- 5: Seitenwand
- 6: Wulstbereich
- 7: Wulstkern
- 8: Kernprofil
- 9: Dichtstreifen
- 9a, 9: Abschnitt
- 9a₁: Teilabschnitt
- 10: Gummibauteil
- 11: Dichtkörper
- 11_{d}: Wandstärke
- b: Breite

## Patentansprüche

1. Fahrzeugluftreifen mit einem Laufstreifen (1), Seitenwänden (5) sowie Wulstbereichen (6) mit Wulstkernen (7) und jeweils einem eine Wulstsitzfläche und eine Wulstzehe bildenden Gummibauteil (10), einer Reifenkarkasse (3) mit zumindest einer Karkasslage und einer Reifeninnenseite,
**dadurch gekennzeichnet,**
**dass** die Reifenkarkasse (3) bis in die Wulstbereiche (6) reichend die Reifeninnenseite bildet,
und **dass** im Reifeninneren ein vorgeformter torusförmiger Dichtkörper (11) aus thermoplastischem Elastomer eingebracht ist, wobei der Dichtkörper (11) derart gestaltet ist, dass er an der Reifeninnenseite anliegt, höchstens bis in die Bereiche seitlich der Wulstkerne (7) reicht und an einzelnen Stellen mit der Reifeninnenseite durch Kleben lösbar verbunden ist.

2. Fahrzeugluftreifen nach Anspruch 1, **dadurch gekennzeichnet, dass** der torusförmige Dichtkörper (11) ausschließlich an den Wulstbereichen (6) lokal angeklebt ist.

3. Fahrzeugluftreifen nach Anspruch 1 oder 2, **dadurch gekennzeichnet, dass** in jedem Wulstbereich (6) ein aus einem luftdichten Material bestehender, in Umfangsrichtung umlaufender Dichtstreifen (9) enthalten ist, welcher einen an der Reifeninnenseite verlaufenen Teilabschnitt aufweist, an welchem der Dichtkörper (11) angeklebt ist.

4. Fahrzeugluftreifen nach Anspruch 3, **dadurch gekennzeichnet, dass** die Dichtstreifen (9) in jedem Wulstbereich (6) zwischen dem Gummibauteil (10) und der Reifenkarkasse (3) und in Kontakt zu dieser eingebaut sind, einen radial innerhalb des Wulstkerns (7) verlaufenden Abschnitt (9b) und einen reifeninnenseitig verlaufenden Abschnitt (9a) aufweisen, welcher mit dem Teilabschnitt (9a₁) den Gummibauteil (10) überragt.

5. Fahrzeugluftreifen nach Anspruch 3 oder 4, **dadurch gekennzeichnet, dass** die Dichtstreifen (9) eine insbesondere konstante Dicke von 0,50 mm bis 1,20 mm aufweisen.

6. Fahrzeugluftreifen nach einem der Ansprüche 3 bis 5, **dadurch gekennzeichnet, dass** die Dichtstreifen (9) aus einem Gummimaterial bestehen, welches zumindest einen Halobutylkautschuk enthält.

7. Fahrzeugluftreifen nach einem der Ansprüche 3 bis 6, **dadurch gekennzeichnet, dass** die jeweils den Gummibauteil (10) überragenden Teilabschnitte (9a₁) der Dichtstreifen (9) eine Breite (b) von 10,00 mm bis 15,00 mm aufweisen.

8. Fahrzeugluftreifen nach einem der Ansprüche 1 bis 7, **dadurch gekennzeichnet, dass** der torusförmige Dichtkörper (11) aus thermoplastischem Elastomerschaum besteht.

9. Fahrzeugluftreifen nach Anspruch 8, **dadurch gekennzeichnet, dass** der thermoplastische Elastomerschaum aus einem thermoplastische Elastomer oder einer Mischung aus mehreren thermoplastischen Elastomeren besteht.

10. Fahrzeugluftreifen nach einem der Ansprüche 1 bis 9, **dadurch gekennzeichnet, dass** der torusförmige Dichtkörper (11) eine Wandstärke (11_{d}) von 0,50 mm bis 8,00 mm, insbesondere von 1,00 mm bis 5,00 mm, bevorzugt bis 2,00 mm, aufweist.

11. Fahrzeugluftreifen nach einem der Ansprüche 1, 2 oder 8 bis 10, **dadurch gekennzeichnet, dass** ein aus thermoplastischem Elastomerschaum bestehender Dichtkörper (11) eine Dichte von 20% bis 95%, insbesondere von 50% bis 95%, bevorzugt von 70% bis 95%, der Dichte des jeweiligen dem Schaum zugrunde liegenden nicht geschäumten thermoplastischen Elastomers bzw. der Dichte der jeweiligen dem Schaum zugrunde liegenden nicht geschäumten thermoplastischen Elastomere aufweist.

12. Fahrzeugluftreifen nach einem der Ansprüche 1 bis 4, **dadurch gekennzeichnet, dass** der thermoplastische Elastomerschaum ein Raumgewicht gemäß DIN EN 14304 2013-04 von 100 kg/m³ bis 1000 kg/m³ aufweist.

13. Fahrzeugluftreifen nach einem der Ansprüche 1 bis 12, **dadurch gekennzeichnet, dass** das/die thermoplastische Elastomer(e) aus der Gruppe thermoplastische Polyamidelastomere, thermoplastische Copolyesterelastomere, thermoplastische Elastomere auf Olefinbasis, thermoplastische Styrol-Blockcopolymere, thermoplastische Elastomere auf Urethanbasis, thermoplastische Vulkanisate oder vernetzte thermoplastische Elastomere auf Olefinbasis ist bzw. sind.

14. Fahrzeugluftreifen nach einem der Ansprüche 1 bis 13, **dadurch gekennzeichnet, dass** auf der dem Laufstreifen (1) zugewandten Außenseite des Dichtkörpers (11) ein NVH (Noise, Vibration, Harshness) - Absorberschaum, beispielsweise aus Polyurethan, angebracht ist.

15. Fahrzeugluftreifen nach einem der Ansprüche 1 bis 14, **dadurch gekennzeichnet, dass** an der Reifeninnenseite radial innerhalb des Laufstreifens (1) eine stichfeste Verstärkungslage, beispielsweise eine mit Kevlar, Stahlcorden und dergleichen, verstärkte Gummilage, festhaftend angebracht ist.
